# EUROPÄISCHE PATENTSCHRIFT

(11) **EP 4 188 764 B1**
(45) Veröffentlichungstag und Bekanntmachung des Hinweises auf die Patenterteilung: **21.08.2024**
(21) Anmeldenummer: 21751975.0
(22) Anmeldetag: 21.07.2021
(51) Int. Cl.: B60T 17/22, G01L 5/22, G01L 5/28, G01M 17/007, G05G 1/30, G05G 1/48, G05G 1/487

(54) **KOPPLUNGSEINRICHTUNG ZUR BEFESTIGUNG EINES AKTUATORS AN EINEM BETÄTIGUNGSORGAN**
COUPLING DEVICE FOR FASTENING AN ACTUATOR TO AN ACTUATING MEMBER
DISPOSITIF D'ACCOUPLEMENT POUR FIXATION D'UN ACTIONNEUR À UN ÉLÉMENT D'ACTIONNEMENT

(30) Priorität: 30.07.2020 DE 102020004636; 30.07.2020 DE 202020003278 U
(43) Veröffentlichungstag der Anmeldung: 07.06.2023
(73) Patentinhaber: STÄHLE GMBH, 71299 Wimsheim (DE)
(72) Erfinder: STÄHLE, Dieter, 75233 Tiefenbronn (DE)
(74) Vertreter: Leitner, Waldemar
(86) Internationale Anmeldenummer: PCT/EP2021/025269
(87) Internationale Veröffentlichungsnummer: WO 2022/022852

(56) Entgegenhaltungen:
- WO-A1-89/00543
- KR-B1- 101 283 357
- US-A1- 2020 156 615
- US-B1- 6 634 466

## Beschreibung

Die Erfindung betrifft eine Kopplungseinrichtung zur Befestigung eines Aktuators an einem Betätigungsorgan, insbesondere einem Pedal eines Fahrzeugs, wobei die Kopplungseinrichtung mit dem Aktuator verbindbar und in Eingriff mit dem Betätigungsorgan bringbar ist, wobei die Kopplungseinrichtung einen Grundkörper aufweist, an dem ein hakenförmiges erstes Kopplungselement angeordnet ist, wobei das erste Kopplungselement einen von einer Rückseite des Grundkörpers abstehenden ersten Schenkel und einen hierzu quer verlaufenden zweiten Schenkel aufweist.

Eine derartige Kopplungseinrichtung ist aus der US 6,634,466 B1 bekannt. Sie dient dazu, einen Aktuator an einem Betätigungsorgan zu befestigen, wobei die Kopplungseinrichtung mit dem Aktuator verbindbar und in Eingriff mit dem Betätigungsorgan bringbar ist. Um dies zu erreichen ist vorgesehen, dass die Kopplungseinrichtung einen zweiteiligen Grundkörper aufweist. An einem verschiebbaren Teil des Grundkörpers sind zwei Vorsprünge und an einem stationären Teil desselben ist ein weiterer Vorsprung angeordnet. Letzterer ist entweder nach oben gebogen, weist also eine J-förmige Form auf, oder kann rechtwinklig zu dem unteren Ende des stationären Teils des Grundkörpers verlaufen, wobei eine L-Form ausgebildet wird. Der weitere Vorsprung umgreift also das in der vorgenannten Druckschrift beschriebene Bremspedal an seinem unteren Ende und an der Rückseite des Bremspedals. Die beiden Vorsprünge des beweglichen Teils umgreifen das Bremspedal an seiner oberen Seite und an seiner Rückseite. Die aus der vorgenannten Druckschrift bekannte Kopplungseinrichtung dient also dazu, das Bremspedal an seinem oberen Ende und an den daran anschließenden rückwärtigen Bereich des oberen Endes und an seinem unteren Ende und dem entsprechenden rückwärtigen Teil des unteren Endes zu umfassen.

Aus der DE 2 004 979 A ist eine Kopplungseinrichtung bekannt, welche insbesondere im automotiven Bereich bei Funktions- und Dauertests von Einrichtungen eines Fahrzeugs eingesetzt wird. Hierbei wird oft ein Fahrroboter verwendet, dessen Aktuator das vorgenannte Betätigungsorgan beaufschlagt und derart einen Betätigungsablauf erzeugt, der den tatsächlichen Abläufen bei der Bedienung des Kraftfahrzeugs durch dessen Fahrer weitgehend entspricht. Derartige Funktions- und/oder Dauertests sollen bevorzugt an Fahrzeugen durchgeführt werden, die ein Betätigungsorgan, in der Regel also ein Fußpedal wie typischerweise ein Gaspedal, ein Bremspedal, ein Kupplungspedal oder ein Handpedal oder ein sonstiges durch den Fuß oder die Hand des Fahrers zu betätigendes Organ aufweisen, welches hinsichtlich seines Aufbaus und seiner Konfiguration demjenigen entspricht, welches bei dem Serienfahrzeug eingesetzt wird, um realitätsnahe Tests zu ermöglichen. Derartige Serien-Pedale weisen aber in der Regel keine Befestigungsmöglichkeiten für einen Aktuator des Fahrroboters auf. Es ist daher erforderlich, eine Kopplungseinrichtung zu verwenden, mittels derer der Aktuator des Fahrroboters am Betätigungsorgan festgelegt wird, so dass ein Wirkeingriff des Aktuators des Fahrroboters an diesem ausgebildet und somit die Aktuatorbewegung des Aktuators des Fahrroboters in eine Betätigungsbewegung des Betätigungsorgans umgesetzt wird.

Bei den bekannten Kopplungseinrichtungen ist vorgesehen, dass der Grundkörper einen U-förmigen, nach einer Seite offenen Querschnitt aufweist. Eine vordere Fläche des Grundkörpers dient zur Befestigung des Aktuators. Eine dieser vorderen Fläche gegenüberliegende hintere Fläche weist einen Langschlitz auf, dessen Breite auf die Breite des Schwenkarms des zu betätigenden Pedals abgestimmt ist. Zur Montage der bekannten Kopplungseinrichtung am Pedal wird diese auf das untere Ende des Pedals aufgeschoben, wobei der Schwenkarm in den Langschlitz des Grundkörpers eingeführt und die Betätigungsplatte in den Innenraum des Grundkörpers eingebracht wird. Dann wird der Grundkörper kraftschlüssig mit dem Pedal verbunden, z. B. durch ein Festschrauben des Grundkörpers an einer Betätigungsplatte desselben. Außerdem ist die Montage der Kopplungseinrichtung am Betätigungsorgan aufwendig, da in der Regel hierzu der Schwenkarm des Pedals - wie vorstehend beschrieben - in den Grundkörper der bekannten Kopplungseinrichtung eingeführt werden muss.

Es sind noch weitere Ausgestaltungen derartiger Kopplungseinrichtungen bekannt. All diesen ist in nachteiliger Art und Weise gemeinsam, dass die Arretierung der Kopplungseinrichtung am Betätigungsorgan, hier also am Pedal, kraftschlüssig erfolgt.

Aus der US 8,615,334 B2 ist eine Kopplungseinrichtung zur Befestigung eines Aktuators an einem Bremspedal eines Kraftfahrzeugs bekannt, wobei die Kopplungseinrichtung mit dem Aktuator verbindbar und in Eingriff mit dem Betätigungsorgan bringbar ist. Sie besitzt einen Grundkörper, der eine Grundplatte aufweist, wobei am oberen und am unteren Ende der Grundplatte jeweils ein hakenförmiges Klemmelement angeordnet ist. Jeweils ein erster Schenkel der beiden hakenförmigen Klemmelemente greift über die obere bzw. die untere Seite des Bremspedals und ein jeweils quer zum ersten Schenkel verlaufender zweiter Schenkel greift an der Rückseite des Bremspedals an. Die Befestigung des Klemmelements am Bremspedal erfolgt dadurch, dass entsprechende Befestigungsschrauben angezogen werden, welche die Kopplungseinrichtung kraftschlüssig am Bremspedal festlegen. In dieser Druckschrift ist des Weiteren noch eine Kopplungseinrichtung für ein Gaspedal beschrieben, welches wieder eine Grundplatte und zwei davon abstehende hakenförmige Klemmelemente besitzt, wobei jeweils an einer Schmalseite der querliegenden Grundplatte eines der vorgenannten hakenförmigen Klemmelemente angeordnet ist. Die Befestigung der Kopplungseinrichtung am Gaspedal erfolgt wiederum durch ein Festziehen von Befestigungsschrauben, welche die beiden Klemmelemente an der Grundplatte fixieren. In beiden Varianten wird also die Kopplungseinrichtung durch eine Klemmung, also kraftschlüssig, am jeweiligen Pedal befestigt.

Auch die US 3,662,593 A zeigt eine kraftschlüssige Befestigung einer Kopplungseinrichtung an einem Pedal.

Ein weiterer Nachteil der bekannten Kopplungseinrichtung ist folgender: Betätigungsorgane, insbesondere Gas-, Brems- oder Kupplungspedale, sind oft nicht nur herstellerspezifisch, sondern in der Regel modellspezifisch ausgebildet. Das bedeutet, dass z. B. die Geometrie des Schwenkarms und/oder des Betätigungselements eines Pedals von Fahrzeugmodell zu Fahrzeugmodell und/oder von Hersteller zu Hersteller signifikant voneinander abweichen. Daraus folgt, dass entweder für jedes Fahrzeugmodell eine spezielle Kopplungseinrichtung verwendet werden muss, oder dass eine gewisse Kopplungseinrichtung zwar bei einem Pedal, nicht aber bei einem anderen Pedal zufriedenstellend und betriebssicher verwendet werden kann.

Es ist daher Aufgabe der vorliegenden Erfindung, eine Kopplungseinrichtung der eingangs genannten Art derart weiterzubilden, dass eine einfachere Montage der erfindungsgemäßen Kopplungseinrichtung an einem Betätigungsorgan, insbesondere an einem Pedal eines Fahrzeugs, ermöglicht ist. Gemäß einer bevorzugten Ausgestaltung soll die erfindungsgemäße Kopplungseinrichtung so ausgebildet sein, dass sie leichter an eine bestimmte Geometrie eines Betätigungsorgans anpassbar ist.

Diese Aufgabe wird erfindungsgemäß dadurch gelöst, dass der erste Schenkel im montierten Zustand der Kopplungseinrichtung seitlich zum Betätigungsorgan und der zweite Schenkel hinter dem Betätigungsorgan angeordnet ist, dass der Grundkörper mindestens ein hakenförmiges zweites Kopplungselement aufweist, dass das mindestens eine zweite Kopplungselement einen von einer Seite des Grundkörpers abstehenden ersten Schenkel und einen hierzu quer verlaufenden zweiten Schenkel aufweist, wobei im montierten Zustand der erste Schenkel an der Vorderseite des Betätigungsorgans und der zweite Schenkel des zweiten Kopplungselements quer zu diesem ersten Schenkel und unter dem unteren Ende des Betätigungsorgans verläuft, so dass das erste hakenförmige Kopplungselement und das zweite hakenförmige Kopplungselement das Betätigungsorgan formschlüssig umgreifen.

Durch die erfindungsgemäßen Maßnahmen wird in vorteilhafter Art und Weise eine Kopplungseinrichtung zur Festlegung eines Aktuators an einem Betätigungsorgan, insbesondere einem Pedal eines Fahrzeugs, geschaffen, welche sich dadurch auszeichnet, dass die Festlegung der Kopplungseinrichtung formschlüssig erfolgt. Eine derartige Maßnahme besitzt den Vorteil einer erhöhten Betriebssicherheit und einer einfacheren Montage.

Eine vorteilhafte Weiterbildung der Erfindung sieht vor, dass ein erster Schenkel des hakenförmig ausgebildeten ersten Kopplungselements und/oder ein erster Schenkel des hakenförmig ausgebildeten zweiten Kopplungselements längenveränderlich ausgebildet ist oder sind. Eine derartige Maßnahme besitzt den Vorteil, dass hierdurch nicht nur eine einfachere Montage der erfindungsgemäßen Kopplungseinrichtung am Betätigungsorgan ermöglicht wird, sondern auch, dass aufgrund der Längenverstellbarkeit des ersten Schenkels des ersten und/oder des zweiten Kopplungselements der Abstand des zweiten Schenkels zur Rückseite des Grundkörpers der erfindungsgemäßen Kopplungseinrichtung veränderbar ist, so dass diese in einfacher Art und Weise an unterschiedlich konfigurierte Betätigungsorgane anpassbar ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine isometrische Ansicht eines Ausführungsbeispiels einer Kopplungseinrichtung zusammen mit einer Ausführungsform eines Betätigungsorgans,
- Figur 2: eine Vorderansicht des Ausführungsbeispiels der Figur 1,
- Figur 3: eine Seitenansicht des Ausführungsbeispiels der Figur 1 aus der Richtung III der Figur 2, und
- Figur 4: eine Seitenansicht des Ausführungsbeispiels der Figur 1 aus der Richtung IV der Figur 2.

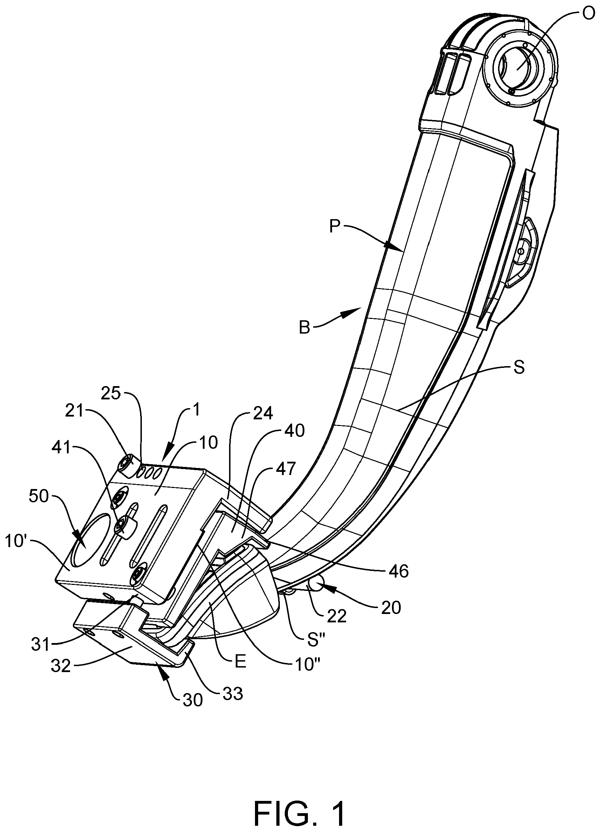

In den Figuren 1 bis 4 ist nun ein allgemein mit 1 bezeichnetes Ausführungsbeispiel einer Kopplungseinrichtung 1 zusammen mit einem Betätigungsorgan B dargestellt. Im hier gezeigten Ausführungsbeispiel ist das Betätigungsorgan B als ein Pedal P ausgebildet, welches einen Schwenkarm S besitzt, der an seinem oberen Ende eine Öffnung O aufweist, durch welche eine in den Figuren nicht gezeigte Achse hindurchführbar ist, über welche das Pedal P schwenkbar in einem Fahrzeug befestigbar ist. An seinem unteren Ende S" weist der Schwenkarm S ein Betätigungselement E auf, welches im hier gezeigten Fall als eine Pedalplatte ausgeführt ist. Ein derartiges Betätigungsorgan B, insbesondere für ein Fahrzeug, ist bekannt und muss daher nicht mehr näher beschrieben werden. Dem Fachmann ist aus der nachstehenden Beschreibung ersichtlich, dass die hier gezeigte Ausgestaltung des Betätigungsorgans B nur exemplarischen Charakter besitzt. Die beschriebene Kopplungseinrichtung 1 ist nicht auf die Verwendung mit einem derartig ausgebildeten Betätigungsorgan B beschränkt.

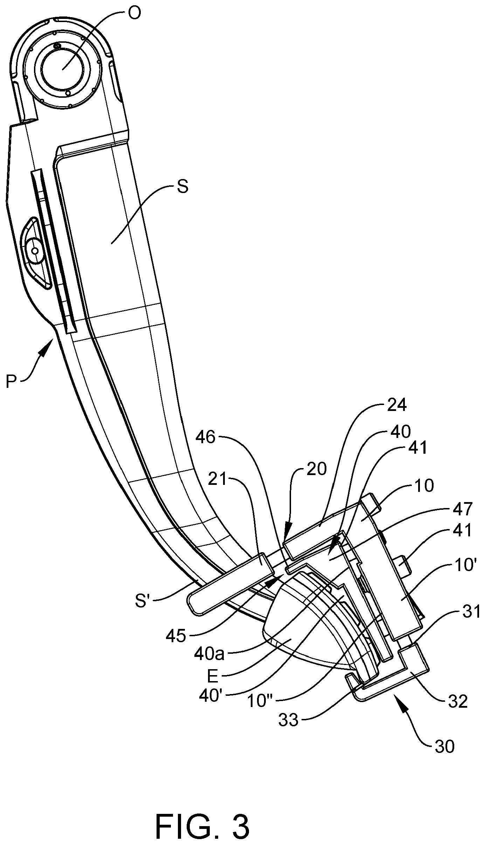

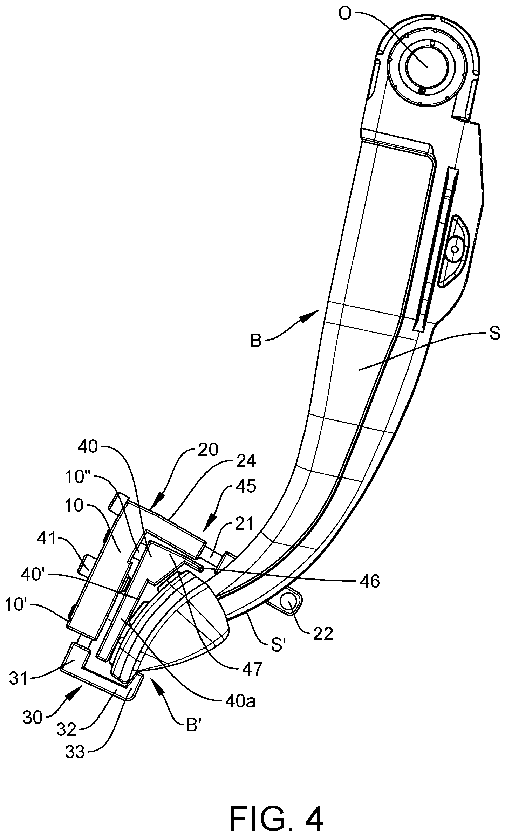

Die Kopplungseinrichtung 1 weist einen Grundkörper 10 auf, welcher vorzugsweise plattenförmig ausgestaltet ist. Wie am besten aus den Figuren 3 und 4 ersichtlich ist, ist im oberen Bereich des Grundkörpers 10 ein erstes Kopplungselement 20 und im unteren Bereich ein zweites Kopplungselement 30 angeordnet, deren genaue Ausbildung und Funktion nachstehend noch im Detail beschrieben werden. Unter dem Grundkörper 10 der Kopplungseinrichtung 1 ist ein Anpresselement 40 angeordnet, welches mit dem Grundkörper 10 über ein Spannorgan 41, z. B. eine Spannschraube verbunden ist, so dass durch eine Bewegung des Spannorgans 41 - wie nachstehend beschrieben - der Abstand des Anpresselements 40 zum Grundkörper 10 verändert werden kann.

Das erste Kopplungselement 20 ist hakenförmig ausgebildet und weist einen von einer Rückseite 10" des Grundkörpers 10 abstehenden, in einer ersten Richtung verlaufenden ersten Schenkel 21 und einen sich in einer hierzu quer verlaufenden zweiten Richtung erstreckenden zweiten Schenkel 22 auf, so dass durch diese beiden Schenkel 21 und 22 das hakenartig ausgestaltete erste Kopplungselement 20 ausgebildet ist. Bevorzugt wird, dass der erste Schenkel 21 in einer orthogonalen Richtung zur Rückseite 10" des Grundkörpers 10 und der zweite Schenkel 22 zur ersten Richtung orthogonal verläuft, so dass also die zweite Richtung kollinear zur Rückseite 10" des Grundkörpers 10 ist. Dem Fachmann ist aber ersichtlich, dass die vorstehend beschriebene orthogonale Anordnung der beiden Schenkel 21 und 22 nicht zwingend ist. Vielmehr ist es auch möglich, dass die den Verlauf des ersten Schenkels 21 festlegende erste Richtung schräg zur Rückseite 10" des Grundkörpers 10 verläuft, und/oder dass die den Verlauf des zweiten Schenkels 22 festlegende zweite Richtung nicht kollinear zu der vorgenannten Rückseite 10" ist, sondern geneigt zu dieser verläuft. Wesentlich ist nur, dass bei der Montage der Kopplungseinrichtung 1 auf dem Betätigungsorgan B, hier also auf dem Schwenkarm S des Pedals P, der erste Schenkel 21 seitlich und der zweite Schenkel 22 hinter dem Grundkörper 10 des Betätigungsorgans B, hier also hinter der Rückseite S' des Schwenkarms S verläuft. Durch die vorstehend beschriebene Ausgestaltung wird also - wie aus den Figuren ersichtlich - der Schwenkarm S vom ersten Kopplungselement 20 seitlich und rückseitig zumindest teilweise umschlossen.

Bevorzugt wird, dass das erste Kopplungselement 20 längenveränderlich ausgebildet ist, so dass der Abstand des vom ersten Schenkel 21 getragenen zweiten Schenkels 22 zur Rückseite 10" des Grundkörpers 10 veränderbar ist.

Vorzugsweise ist vorgesehen, dass der Grundkörper 10 an seiner Rückseite 10" eine Leiste 24 aufweist, welche sich vorzugsweise über die gesamte Breite des Grundkörpers 10 erstreckt und in welcher erste Schenkel 21 verschiebbar gelagert ist. Die Verwendung der Leiste 24 bewirkt, dass hierdurch der unabgestützte Bereich des ersten Schenkels 21, welcher von der Rückseite 10" des Grundkörpers 10 absteht, verringert werden kann, womit einem Auftreten von unerwünschten Hebelmomenten zumindest entgegengewirkt wird.

Des Weiteren wird bevorzugt, dass der erste Schenkel 21 des ersten Kopplungselements 20 an mindestens zwei und vorzugsweise mehreren Positionen im Grundkörper 10 montierbar ist. Beim beschriebenen Ausführungsbeispiel wird dies dadurch erreicht, dass die Leiste 24, in welcher der erste Schenkel 21 aufgenommen ist, mehrere voneinander beabstandete Aufnahmeöffnungen 25 für den ersten Schenkel 21 aufweist. Diese Maßnahme besitzt den Vorteil, dass hierdurch in einfacher Art und Weise eine leichte Anpassung der Kopplungseinrichtung 1 an unterschiedlich breite Betätigungsorgane B ermöglicht ist.

Die Funktionsweise des ersten Kopplungselement 20 sowie der Vorteil der - nicht zwingend erforderlichen - Verlängerbarkeit desselben wird weiter unten noch bei der Beschreibung der Montage der Kopplungseinrichtung 1 am Betätigungsorgan B erläutert werden.

Das im unteren Bereich des Grundkörpers 10 angeordnete zweite Kopplungselement 30 dient nun dazu, das untere Ende B' des Betätigungsorgans B, hier also das untere Ende S" des Schwenkarms S, zu umfassen. Hierzu ist vorgesehen, dass das zweite Kopplungselement 30 wiederum hakenartig ausgebildet ist und sich - wie aus den Figuren ersichtlich - im montierten Zustand um das untere Ende B' des Betätigungsorgans B herum erstreckt. Hierzu weist das zweite Kopplungselement 30 wiederum einen in einer ersten Richtung verlaufenden ersten Schenkel 31, einen in einer zweiten Richtung verlaufenden zweiten Schenkel 32 und vorzugsweise einen in einer dritten Richtung verlaufenden dritten Schenkel 33 auf. Bevorzugt wird wiederum, dass der dritte Schenkel 33 orthogonal zum zweiten Schenkel 32 verläuft, der wiederum orthogonal zum ersten Schenkel 31 angeordnet ist, obwohl auch hier eine derartige orthogonale Anordnung nicht zwingend ist. Wesentlich ist, dass - analog zum ersten Kopplungselement 20 - der erste Schenkel 31 sich an der Vorderseite 10' des Grundkörpers 10 erstreckt und der zweite Schenkel 32 unter dem unteren Ende B' des Betätigungsorgans B angeordnet ist, also dass hierdurch das untere Ende B' umfasst wird. Das hakenförmig ausgebildete zweite Kopplungselement 30 bildet somit einen unteren Anschlag aus, welcher bewirkt, dass bei einer Beaufschlagung der Kopplungseinrichtung 1 und somit des Betätigungsorgans B durch den Aktuator diese nicht nach oben (in der Darstellung der Figuren) ausweichen kann. Der vom zweiten Schenkel 32 abstehende dritte Schenkel 33 hintergreift hierbei das untere Ende B' des Betätigungsorgans B und beaufschlagt im montierten Zustand dessen Rückseite. Es ist aber durchaus möglich, dass dieser dritte Schenkel 33 nicht vonnöten ist, wenn durch die ersten beiden Schenkel 31 und 32 eine hinreichend sichere Festlegung des zweiten Kopplungselements 30 am Betätigungsorgan B, z. B. durch eine entsprechende Ausgestaltung des zweiten Schenkels 32 mit einer z. B. rutschsicheren Oberfläche, gewährleistet ist, dass im montierten Zustand das zweite Kopplungselement 30 hinreichend betriebssicher am Betätigungsorgan B angebracht werden kann.

Des Weiteren wird wiederum bevorzugt, dass auch das zweite Kopplungselement 30 - wie auch das erste Kopplungselement 20 - lageveränderlich am Grundkörper 10 angeordnet ist. Insbesondere wird bevorzugt, dass das zweite Kopplungselement 30 in unterschiedlichen Breitenpositionen des Grundkörpers 10 an dessen Schmalseite anordbar ist.

Vorzugsweise ist wiederum das zweite Kopplungselement 30 längenveränderbar ausgebildet. Hierbei wird bevorzugt, dass der erste Schenkel 31 verschiebbar im Grundkörper 10 angeordnet ist. Auch hier muss wieder betont werden, dass diese Längenveränderbarkeit des zweiten Kopplungselements 30 zwar vorteilhaft, aber aus den nachstehend aufgeführten Gründen nicht zwingend ist.

Wie vorstehend beschrieben, umgreift das zweite Kopplungselement 30 das untere Ende B` des Betätigungsorgans B und es wird ein unterer Anschlag für die Kopplungseinrichtung 1 ausgebildet, welcher bewirkt, dass bei einer Kraftbeaufschlagung der Kopplungseinrichtung 1 diese nicht nach oben ausweichen kann. Bevorzugt wird, dass die Kopplungseinrichtung 1 einen zum unteren Anschlag komplementären oberen Anschlag aufweist, welcher ein Ausweichen der am Betätigungsorgan B festgelegten Kopplungseinrichtung 1 nach unten zumindest erschwert. Hierzu ist beim beschriebenen Ausführungsbeispiel vorgesehen, dass die Kopplungseinrichtung 1 ein drittes Kopplungselement 45 aufweist, welches den vorstehend angesprochenen oberen Anschlag ausbildet. Beim hier beschriebenen Ausführungsbeispiel ist hierzu vorgesehen, dass am Anpresselement 40 - wie am besten aus den Figuren 3 und 4 ersichtlich ist - ein von der Rückseite 40' des Anpresselements 40 abstehenden Vorsprung 46 angeordnet ist, welcher das obere Ende des Betätigungselements E übergreift, so dass ein Ausweichen der Kopplungseinrichtung 1 - in der Darstellung der Figuren 3 und 4 - nach unten erschwert oder verhindert wird. Auch hier kann wieder vorgesehen sein, dass der Vorsprung 46 verschiebbar im Grundkörper 40a des Anpresselements 40 gelagert ist, wie dies z. B. beim ersten Kopplungselement 20 beschrieben wurde.

Des weiteren wird bevorzugt, dass das Anpresselement 40 eine der Leiste 24 des ersten Kopplungselements 20 entsprechende Leiste 47 aufweist, in welcher der Vorsprung 46 - falls gewünscht verschiebbar - angeordnet ist. Auch hier wird durch diese Maßnahme die unabgestützte Länge des Vorsprungs 46, welche auf der Rückseite 40' des Anpresselements 40 hervorsteht, verringert.

Bevorzugt wird des Weiteren, dass - wie aus den Figuren 3 und 4 ersichtlich - diese Leiste 47 eine abgeschrägte Form aufweist. Dies ist insbesondere dann von Vorteil, wenn - wie beim beschriebenen Ausführungsbeispiel - das Betätigungselement E nicht eben verläuft, insbesondere wie in den Figuren dargestellt, einen gekrümmten Verlauf aufweist, da sich durch diese Maßnahme das Anpresselement 40 besser am Betätigungselement E abstützen kann.

Zur Montage der Kopplungseinrichtung 1 auf dem Betätigungsorgan B wird - bei hinreichend weit herausgezogenen Kopplungselementen 20, 30 - der Grundkörper 10 und somit das mit ihm über das Spannorgan 41 verbundene Anpresselement 40 dem unteren Ende B' des Betätigungsorgans B angenähert und das Anpresselement 40 wird in Anlage zum Betätigungselement E des Betätigungsorgans B gebracht oder zumindest an dieses angenähert. Das dritte Kopplungselement 45 übergreift dabei das obere Ende E' des Betätigungselements E. Falls erforderlich wird der Vorsprung 46 durch eine entsprechende Bewegung lagepositioniert, so dass der vorstehend beschriebene obere Anschlag der Kopplungseinrichtung 1 ausgebildet wird. Dann wird das erste Kopplungselement 20 derart angeordnet, dass der zweite Schenkel 22 hinter dem Betätigungsorgan B liegt und vorzugsweise an dessen Rückseite anliegt, wie in den Figuren 3 und 4 dargestellt. Falls erforderlich wird dazu der erste Schenkel 21 des ersten Kopplungselements 20 eingeschoben. In entsprechender Art und Weise wird das zweite Kopplungselement 30 so angeordnet, dass der dritte Schenkel 33 hinter dem unteren Ende B' des Betätigungsorgans B liegt, wie dies ebenfalls in den Figuren dargestellt ist. Erforderlichenfalls wird dabei der erste Schenkel 31 des zweiten Kopplungselements 30 eingeschoben. Dem Fachmann ist natürlich ersichtlich, dass es nicht zwingend ist, dass das erste Kopplungselement 20 vor dem zweiten Kopplungselement 30 wie vorstehend beschrieben lagepositioniert wird. Natürlich ist es möglich, zuerst das zweite Kopplungselement 30 und dann das erste Kopplungselement 20 zu positionieren, wobei natürlich auch eine gleichzeitige Positionierung dieser beiden Kopplungselemente 20, 30 möglich ist.

Nachdem die Kopplungselemente 20, 30 und 45 lagepositioniert wurden, wird das Spannorgan 41 derart betätigt, dass der Abstand zwischen dem Anpresselement 40 und dem Grundkörper 10 vergrößert wird. Das Anpresselement 40 wird dabei gegen das Betätigungselement E des Betätigungsorgans B gepresst und der Grundkörper 10 und somit die mit ihm verbundenen Kopplungselemente 20, 30 und 45 werden somit in Anlage zum Betätigungsorgan B gebracht und legen somit die Kopplungseinrichtung 1 an diesem formschlüssig fest.

Dem Fachmann ist ersichtlich, dass der vorstehend beschriebene Montagevorgang nur exemplarischen Charakter besitzt. Vielmehr ist es möglich, in Abhängigkeit von der speziellen Gestaltung und/oder Konfiguration des Betätigungsorgans B von der vorstehend beschriebenen Vorgangsweise abzuweichen.

An dieser Stelle soll noch erwähnt werden, dass es nicht zwingend ist, das Anpresselement 40 als eine Anpressplatte 40' auszubilden, wie dies in den Figuren dargestellt ist. Es kann für gewisse Anwendungszwecke ausreichend sein, dass auf dieses plattenförmige Anpresselement 40 verzichtet und folglich das Spannorgan 41 direkt am Betätigungsorgan B angreift, damit der Grundkörper 10 von diesem wegbewegt und somit die beiden Kopplungselemente 20, 30 in formschlüssige Anlage an das Betätigungsorgan B gebracht werden können.

Es ist auch denkbar, dass das Anlegen der Kopplungselemente 20, 30 an das Betätigungsorgan B derart erfolgt, dass der Grundkörper 10 der Kopplungseinrichtung 1 in Anlage mit dem Betätigungsorgan B gebracht und dann die beiden Kopplungselemente 20, 30 durch eine Spanneinrichtung gegen die Rückseite des Betätigungsorgans B gezogen werden. Hierzu kann vorgesehen sein, dass jedes dieser beiden Kopplungselemente 20, 30 ein Spannorgan (nicht gezeigt) aufweist. Auch dann kann das Anpresselement 40 entfallen, da die Rückseite 10" des Grundkörpers 10 auf der Vorderseite des Betätigungsorgans B aufliegt.

Bei der vorstehenden Beschreibung wurde davon ausgegangen, dass mindestens eines der Kopplungselemente 20, 30 längenverstellbar ausgebildet ist. Eine derartige Ausgestaltung erlaubt in vorteilhafter Art und Weise eine einfachere Montage und Festlegung der Kopplungseinrichtung 1 am Betätigungsorgan B. Die Verstellbarkeit der Kopplungselemente 20, 30 erlaubt in vorteilhafter Art und Weise auch eine einfache Anpassbarkeit der beschriebenen Kopplungseinrichtung 1 an unterschiedlich konfigurierte Betätigungsorgane B, da hierdurch der Abstand des zweiten Schenkels 22 bzw. 32 des ersten und/oder zweiten Kopplungselements 20 und/oder 30 individuell auf das jeweilige Betätigungsorgan B angepasst werden kann. Eine derartige Verstellbarkeit ist aber nicht zwingend. Wenn auf die vorstehend beschriebene individuelle Anpassbarkeit verzichtet werden kann oder soll, ist es ausreichend, dass eines oder beide Kopplungselemente 20 und/oder 30 eine feste Länge besitzen, also nicht beweglich in dem Grundkörper 10 angeordnet sind.

Nachdem die Kopplungseinrichtung 1 wie vorstehend beschrieben am Betätigungsorgan B festgelegt wurde, kann nun ein in den Figuren nicht gezeigter Aktuator, insbesondere ein Aktuator eines Fahrroboters, mit dem Grundkörper 10 verbunden werden, so dass durch die Bewegung des Aktuators eine Betätigungsbewegung des Betätigungsorgans B bewirkt wird. Hierzu ist vorgesehen, dass an der Vorderseite 10' des Grundkörpers 10 der Kopplungseinrichtung 1 ein entsprechendes Verbindungselement 50 vorgesehen ist, welches eine Verbindung der Kopplungseinrichtung 1 mit dem Aktuator ermöglicht. Im hier beschriebenen Fall ist vorgesehen, dass in der Vorderseite 10' des Grundkörpers 10 eine Gewindebohrung 51 vorgesehen ist, in welche eine Ende des Aktuators, insbesondere das vordere Ende einer Aktuatorstange, einschraubbar ist. Natürlich ist diese Art und Weise der Verbindung zwischen Aktuator und Kopplungseinrichtung 1 nicht zwingend. Vielmehr ist eine Vielzahl von Möglichkeiten denkbar, den Aktuator und die Kopplungseinrichtung 1 miteinander zu verbinden.

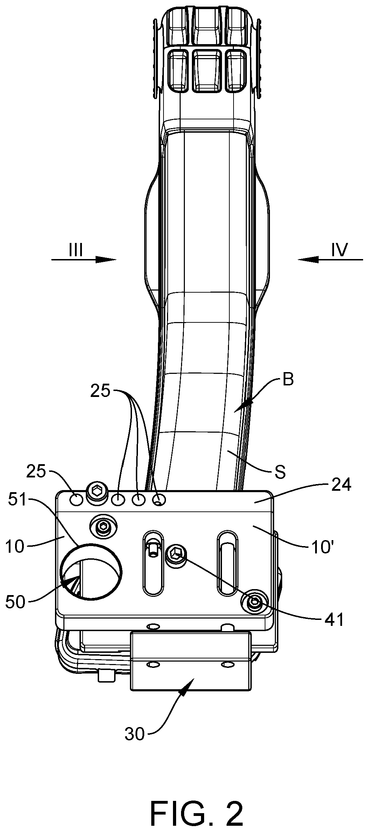

Vorzugsweise ist vorgesehen, dass - wie insbesondere aus der Figur 2 ersichtlich ist - das Verbindungselement 50 zur Mitte des Grundkörpers 10 hin versetzt angeordnet ist. Eine derartige Maßnahme besitzt den Vorteil, dass hierdurch der Grundkörper 10 nicht nur vom Aktuator kraftbeaufschlagbar ist, sondern dass auch Platz für den Fuß eines Bedieners verbleibt, so dass das Betätigungsorgan B auch vom Bediener beaufschlagbar ist. Dies ist insbesondere dann von Vorteil, wenn durch den Aktuator und die Kopplungseinrichtung 1 ein Bremspedal bedient werden soll, da aufgrund der vorstehend beschriebenen versetzten Anordnung des Verbindungselements 50 noch eine "manuelle" Notbremsfunktion durchgeführt werden kann.

Zusammenfassend ist festzuhalten, dass durch die beschriebenen Maßnahmen in vorteilhafter Art und Weise eine Kopplungseinrichtung 1 für ein Betätigungsorgan B, insbesondere für ein Betätigungsorgans B eines Fahrzeugs, ausgebildet wird, welches sich dadurch auszeichnet, dass die Kopplungseinrichtung 1 formschlüssig am Betätigungsorgan B festgelegt werden kann. Die beschriebene Kopplungseinrichtung 1 zeichnet sich durch ihren einfachen Aufbau und ihre leichte Montierbarkeit aus. Von Vorteil ist, dass durch eine Längenverstellbarkeit des ersten Schenkels 21 des ersten Kopplungselements 20 und/oder des ersten Schenkels 31 des zweiten Kopplungselements 30 und/oder des Vorsprungs 46 des dritten Kopplungselements 45 nicht nur eine einfachere Montage, sondern auch eine Anpassung an unterschiedlich konfigurierte Betätigungsorgane ermöglicht ist.

Bei der vorstehenden Beschreibung wird davon ausgegangen, dass das Betätigungsorgan B hängend angeordnet ist, dass also die durch die Öffnung O verlaufende Schwenkachse über dem Betätigungselement E verläuft. Die beschriebene Kopplungseinrichtung 1 ist natürlich nicht auf eine derartige Anordnung des Betätigungsorgans B beschränkt. Vielmehr ist es z. B. auch möglich, die Kopplungseinrichtung 1 bei einem stehend angeordneten Betätigungsorgan B einzusetzen, also bei einem Betätigungsorgan B, bei dem die vorgenannte Schwenkachse unter dem Betätigungselement E verläuft. Bei einer derartigen Anordnung wird dann bevorzugt, dass die Kopplungseinrichtung 1 gegenüber der in den Figuren 1 bis 4 dargestellten Anordnung um 180° gedreht angeordnet ist, so dass also das zweite Kopplungselement 30 über dem - dann oberen Ende B" - des Betätigungsorgans B angeordnet ist. Auch ist es nicht erforderlich, dass das Betätigungsorgan B als ein Schwenk-Betätigungsorgan B mit einem Schwenkarm S ausgebildet ist. Die beschriebene Kopplungseinrichtung 1 eignet sich auch für einen Einsatz - ohne ein weiteres Beispiel zu nennen - bei Betätigungsorgan B, die durch eine lineare Betätigungsbewegung, z. B. eine Verschiebebewegung, betätigbar sind.

## Patentansprüche

1. Kopplungseinrichtung zur Befestigung eines Aktuators an einem Betätigungsorgan (B), insbesondere einem Pedal (P) eines Fahrzeugs, wobei die Kopplungseinrichtung (1) mit dem Aktuator verbindbar und in Eingriff mit dem Betätigungsorgan (B) bringbar ist, wobei die Kopplungseinrichtung (1) einen Grundkörper (10) aufweist, an dem ein hakenförmiges erstes Kopplungselement (20) angeordnet ist, wobei das erste Kopplungselement (20) einen von einer Rückseite (10") des Grundkörpers (10) abstehenden ersten Schenkel (21) und einen hierzu quer verlaufenden zweiten Schenkel (22) aufweist, **dadurch gekennzeichnet, dass** der erste Schenkel (21) im montierten Zustand der Kopplungseinrichtung (1) seitlich zum Betätigungsorgan (B) und der zweite Schenkel (22) hinter dem Betätigungsorgan (B) angeordnet ist, dass der Grundkörper (10) mindestens ein hakenförmiges zweites Kopplungselement (20) aufweist, dass das mindestens eine zweite Kopplungselement (30) einen von einer Seite des Grundkörpers (10) abstehenden ersten Schenkel (31) und einen hierzu quer verlaufenden zweiten Schenkel (32) aufweist, wobei im montierten Zustand der erste Schenkel (31) an der Vorderseite des Betätigungsorgans (B) und der zweite Schenkel (32) des zweiten Kopplungselements (30) quer zu diesem ersten Schenkel (31) und unter dem unteren Ende (B') des Betätigungsorgans (B) verläuft, so dass das erste hakenförmige Kopplungselement (20) und das zweite hakenförmige Kopplungselement (30) das Betätigungsorgan (B) formschlüssig umgreifen.

2. Kopplungseinrichtung nach Anspruch 1, **dadurch gekennzeichnet, dass** das zweite Kopplungselement (30) einen vom zweiten Schenkel (32) abstehenden dritten Schenkel (33) aufweist, und dass im montierten Zustand der dritte Schenkel (33) hinter einem unteren Ende (B') des Betätigungsorgans (B) verläuft.

3. Kopplungseinrichtung nach einem der Ansprüche 1 oder 2, **dadurch gekennzeichnet, dass** die Kopplungseinrichtung (1) ein drittes Kopplungselement (45) besitzt, welches ein Ende (E') eines Betätigungselements (E) des Betätigungsorgans (B) zumindest teilweise umfasst.

4. Kopplungseinrichtung nach einem der Ansprüche 1 bis 3, **dadurch gekennzeichnet, dass** die Kopplungseinrichtung (1) ein Anpresselement (40) mit einem Grundkörper (40a) aufweist, durch welches der Abstand des Grundkörpers (10) zu dem Betätigungselement (E) des Betätigungsorgans (B) veränderbar ist.

5. Kopplungseinrichtung nach Anspruch 4, **dadurch gekennzeichnet, dass** das Anpresselement (40) ein Spannorgan (41) aufweist, durch welches das Betätigungsorgan (B) beaufschlagbar ist.

6. Kopplungseinrichtung nach einem der Ansprüche 4 oder 5, **dadurch gekennzeichnet, dass** das Anpresselement (40) eine Anpressplatte (40') aufweist, welche auf das Betätigungsorgan (B) aufsetzbar ist.

7. Kopplungseinrichtung nach einem der Ansprüche 3 bis 6, **dadurch gekennzeichnet, dass** das dritte Kopplungselement (45) am Grundkörper (40a) des Anpresselements (40) angeordnet ist.

8. Kopplungseinrichtung nach einem der Ansprüche 1 bis 7, **dadurch gekennzeichnet, dass** der erste Schenkel (21) des ersten Kopplungselements (20) und/oder der erste Schenkel (31) des zweiten Kopplungselements (30) längenveränderbar ausgebildet ist oder sind.

9. Kopplungseinrichtung nach einem der Ansprüche 3 bis 8, **dadurch gekennzeichnet, dass** der Vorsprung (46) des dritten Kopplungselements (45) längenveränderbar ausgebildet ist.

10. Kopplungseinrichtung nach einem der Ansprüche 3 bis 9, **dadurch gekennzeichnet, dass** der Vorsprung (46) des dritten Kopplungselements (45) längenveränderbar im Grundkörper (40a) des Anpresselements (40) angeordnet ist.

11. Kopplungseinrichtung nach einem der vorangehenden Ansprüche, **dadurch gekennzeichnet, dass** das erste Kopplungselement (20) und/oder das zweite Kopplungselement (30) lageveränderlich am Grundkörper (10) der Kopplungseinrichtung (1) angeordnet oder anordbar ist.

12. Kopplungseinrichtung nach einem der vorangehenden Ansprüche, **dadurch gekennzeichnet, dass** an der Vorderseite (10') des Grundkörpers (10) ein Verbindungselement (50) vorgesehen ist, mittels dessen der Aktuator an der Kopplungseinrichtung (1) festlegbar ist.

13. Kopplungseinrichtung nach Anspruch 12, **dadurch gekennzeichnet, dass** das Verbindungselement (50) dezentral im oder am Grundkörper (10) angeordnet ist.

## Claims

1. Coupling device for fastening an actuator to an actuating member (B), in particular a pedal (P) of a vehicle, wherein the coupling device (1) can be connected to the actuator and can be brought into engagement with the actuating member (B), the coupling device (1) comprises a base body (10) on which a hook-shaped first coupling element (20) is arranged, the first coupling element (20) comprising a first leg (21) projecting from a rear side (10") of the base body (10) and a second leg (22) extending transversely thereto, **characterized in that** the first leg (21), in the mounted state of the coupling device (1), is arranged lateral with respect to the actuating member (B) and the second leg ( 22) is arranged behind the actuating member (B), and that the base body (10) comprises at least one second coupling element (30), said second coupling element (30) having a first leg (31) projecting from one side of the base body (10) and a second leg (32) extending transversely thereto, wherein, in the mounted state, the first leg (31) extends on the front side of the actuating member (B) and the second leg (32) of the second coupling element (30) extends transversely with respect to said first leg (31), so that the first hook-shaped coupling element (20) and the second hook-shaped coupling element (30) engage around the actuating member (B)in a form-fitting manner.

2. Coupling device according to claim 1, **characterized in that** the second coupling element (30) has a third leg (33) projecting from the second leg (32), and that in the mounted state the third leg (33) extends behind the lower end (B' ) of the actuator (B).

3. Coupling device according to one of claims 1 or 2, **characterized in that** the coupling device (1) comprises a third coupling element (45) which at least partially encompasses one end (E') of an actuating element (E) of the actuating member (B).

4. Coupling device according to one of claims 1 to 3, **characterized in that** the coupling device (1) comprises a pressing element (40) with a base body (40a), via which the distance between the base body (10) and the actuating element (E) of the actuating member (B) can be changed.

5. Coupling device according to claim 4, **characterized in that** the pressing element (40) comprises a clamping element (41) by which the actuating member (B) can be acted upon.

6. Coupling device according to one of claims 4 or 5, **characterized in that** the pressing element (40) comprises a pressing plate (40') which can be placed on the actuating member (B).

7. Coupling device according to one of the claims 3 to 6, **characterized in that** the third coupling element (45) is arranged on the base body (40a) of the pressing element (40).

8. Coupling device according to one of the claims 1 to 7, **characterized in that** the first leg (21) of the first coupling element (20) and/or the first leg (31) of the second coupling element (30) is or are designed to be variable in length.

9. Coupling device according to one of the claims 3 to 8, **characterized in that** the projection (46) of the third coupling element (45) is designed to be variable in length.

10. Coupling device according to one of the claims 3 to 9, **characterized in that** the projection (46) of the third coupling element (45) is arranged in the base body (40a) of the pressing element (40) variably in length.

11. Coupling device according to one of the preceding claims, **characterized in that** the first coupling element (20) and/or the second coupling element (30) is arranged or can be arranged in variable positions on the base body (10) of the coupling device (1).

12. Coupling device according to one of the preceding claims, **characterized in that** a connecting element (50) is provided on the front side (10') of the base body (10), by means of which the actuator can be fixed to the coupling device (1).

13. Coupling device according to claim 12, **characterized in that** the connecting element (50) is arranged decentrally in or on the base body (10).

## Revendications

1. Dispositif d'accouplement pour la fixation d'un actionneur sur un organe d'actionnement (B), en particulier une pédale (P) d'un véhicule, dans lequel le dispositif d'accouplement (1) peut être relié à l'actionneur et peut être amené en prise avec l'organe d'actionnement (B), dans lequel le dispositif d'accouplement (1) présente un corps de base (10), sur lequel est disposé un premier élément d'accouplement (20) en forme de crochet, dans lequel le premier élément d'accouplement (20) présente une première branche (21) faisant saillie d'une face arrière (10'') du corps de base (10) et une deuxième branche (22) s'étendant transversalement par rapport à celle-ci, **caractérisé en ce que** la première branche (21) dans l'état monté du dispositif d'accouplement (1) est disposée latéralement par rapport à l'organe d'actionnement (B) et la deuxième branche (22) derrière l'organe d'actionnement (B), que le corps de base (10) présente au moins un deuxième élément d'accouplement (20) en forme de crochet, que l'au moins un deuxième élément d'accouplement (30) présente une première branche (31) faisant saillie d'une face du corps de base (10) et une deuxième branche (32) s'étendant transversalement par rapport à celle-ci, dans lequel dans l'état monté la première branche (31) s'étend sur la face avant de l'organe d'actionnement (B) et la deuxième branche (32) du deuxième élément d'accouplement (30) transversalement par rapport à cette première branche (31) et sous l'extrémité inférieure (B') de l'organe d'actionnement (B), de sorte que le premier élément d'accouplement (20) en forme de crochet et le deuxième élément d'accouplement (30) en forme de crochet entourent l'organe d'actionnement (B) par coopération de formes.

2. Dispositif d'accouplement selon la revendication 1, **caractérisé en ce que** le deuxième élément d'accouplement (30) présente une troisième branche (33) faisant saillie de la deuxième branche (32), et que dans l'état monté la troisième branche (33) s'étend derrière une extrémité inférieure (B') de l'organe d'actionnement (B) .

3. Dispositif d'accouplement selon l'une quelconque des revendications 1 ou 2, **caractérisé en ce que** le dispositif d'accouplement (1) possède un troisième élément d'accouplement (45), lequel comprend au moins en partie une extrémité (E') d'un élément d'actionnement (E) de l'organe d'actionnement (B).

4. Dispositif d'accouplement selon l'une quelconque des revendications 1 à 3, **caractérisé en ce que** le dispositif d'accouplement (1) présente un élément de pression (40) avec un corps de base (40a), par lequel la distance du corps de base (10) par rapport à l'élément d'actionnement (E) de l'organe d'actionnement (B) peut être modifiée.

5. Dispositif d'accouplement selon la revendication 4, **caractérisé en ce que** l'élément de pression (40) présente un organe de serrage (41), par lequel l'organe d'actionnement (B) peut être sollicité.

6. Dispositif d'accouplement selon l'une quelconque des revendications 4 ou 5, **caractérisé en ce que** l'élément de pression (40) présente un plateau de pression (40'), lequel peut être posé sur l'organe d'actionnement (B).

7. Dispositif d'accouplement selon l'une quelconque des revendications 3 à 6, **caractérisé en ce que** le troisième élément d'accouplement (45) est disposé sur le corps de base (40a) de l'élément de pression (40).

8. Dispositif d'accouplement selon l'une quelconque des revendications 1 à 7, **caractérisé en ce que** la première branche (21) du premier élément d'accouplement (20) et/ou la première branche (31) du deuxième élément d'accouplement (30) est ou sont réalisées de manière à pouvoir être modifiées en longueur.

9. Dispositif d'accouplement selon l'une quelconque des revendications 3 à 8, **caractérisé en ce que** la saillie (46) du troisième élément d'accouplement (45) est réalisée de manière à pouvoir être modifiée en longueur.

10. Dispositif d'accouplement selon l'une quelconque des revendications 3 à 9, **caractérisé en ce que** la saillie (46) du troisième élément d'accouplement (45) est disposée de manière à pouvoir être modifiée en longueur dans le corps de base (40a) de l'élément de pression (40).

11. Dispositif d'accouplement selon l'une quelconque des revendications précédentes, **caractérisé en ce que** le premier élément d'accouplement (20) et/ou le deuxième élément d'accouplement (30) est disposé ou peut être disposé de manière variable en position sur le corps de base (10) du dispositif d'accouplement (1).

12. Dispositif d'accouplement selon l'une quelconque des revendications précédentes, **caractérisé en ce qu'**un élément de liaison (50), au moyen duquel l'actionneur peut être immobilisé sur le dispositif d'accouplement (1), est prévu sur la face avant (10') du corps de base (10).

13. Dispositif d'accouplement selon la revendication 12, **caractérisé en ce que** l'élément de liaison (50) est disposé de manière décentralisée dans ou sur le corps de base (10).
